# EUROPEAN PATENT APPLICATION

(11) **EP 1 359 419 A1**
(43) Date of publication of application: **05.11.2003**
(21) Application number: 03252737.6
(22) Date of filing: 30.04.2003
(51) Int. Cl.: G01N 33/52, G01N 21/27

(54) **Device and method for analyte concentration determination**

(30) Priority: 01.05.2002 US 137559
(71) Applicant: Lifescan, Inc., Milpitas, California 95035-6312 (US)
(72) Inventor: Eyster, Curt R., San Jose, California 95139 (US); Wallace, Brian, San Jose, California 95118 (US)
(74) Representative: Mercer, Christopher Paul

(57) **Abstract**

Devices for determining the concentration of an analyte in a physiological sample are provided. The subject devices include a calibration means, at least one light source, a photometric detector array having at least one calibration detector and at least one other detector. The at least one calibration detector is capable of detecting a calibration mark from an analyte concentration measurement device container for calibrating the analyte concentration determination device. The at least one other detector is used for detecting reflected light from an analyte concentration measurement device associated with the analyte concentration determination device. The means for calibrating a component, aspect or feature of the analyte concentration determination device is based on the calibration mark. The subject invention also includes methods for calibrating a component, aspect or feature of a subject device based on the detected calibration mark. Also provided are kits for use in practicing the subject methods.

## Description

### FIELD OF THE INVENTION

The field of this invention is analyte concentration determination.

### BACKGROUND OF THE INVENTION

Analyte concentration determination in physiological samples is of ever increasing importance to today's society. Such assays find use in a variety of application settings, including clinical laboratory testing, home testing, etc., where the results of such testing play a prominent role in the diagnosis and management of a variety of disease conditions. Analytes of interest include glucose for diabetes management, cholesterol for monitoring cardiovascular conditions, and the like.

In response to this growing importance of analyte concentration determination, a variety of analyte concentration determination protocols and devices for both clinical and home testing have been developed. Of great interest and use in this area are optical based analyte determination devices and methods in which a sample is illuminated with light and reflected light therefrom is detected where the amount of detected light is related to analyte concentration. Of increasing interest in such optical based measurement protocols is the use of assay systems that employ analyte concentration measurement devices configured as hollow frustums or configured as test strips or cards, where the hollow frustum and test strips are configured to be automatically read by a suitable analyte concentration determination device, i.e., a meter. Typically, a physiological sample such as blood, blood derivatives, interstitial fluid, urine, etc., is introduced to an analyte concentration measurement device, where the sample reacts with certain reagents or components associated with the testing area of the analyte concentration measurement device to produce a color reaction. Analyte concentration is measured by associating the analyte concentration measurement device with a meter that is essentially a reflectance photometer and which determines analyte concentration by irradiating the testing area of the analyte concentration measurement device, detecting reflected light therefrom and relating the amount of reflected light to analyte concentration.

Whether the test is performed in the home, physician's office, clinic or hospital, accuracy and reproducibility of the determined analyte concentration are extremely important, especially for individuals suffering from life-threatening illnesses who are dependent upon the results of these analyte concentration determinations for illness management, for example, diabetics where the concentration of glucose determines insulin intake amounts, etc. However, the analyte concentration measurement devices used in these tests, by their nature, do not lend themselves to large-scale manufacture with adequate device-to-device reproducibility from one batch to the next. Consequently, it is necessary to assign to each lot of analyte concentration measurement devices a calibration code that corrects for this variability. The calibration code may be marked on any convenient location, such as the container that houses or retains the analyte concentration measurement devices or the instructions that accompany such devices. Usually, the user manually enters the code into the meter when he or she begins a new test. If the user fails to enter a new calibration code or enters an incorrect one, the resulting value of analyte concentration will be incorrect.

Attempts to provide automatic meter calibration that does not involve the user manually inputting the calibration code have been made. However, while effective, such attempts suffer from disadvantages.

U.S. Pat. No. 4,476,149, to Poppe et al., discloses an analysis test strip and process for making it that includes on-strip calibration information. The strip includes a "test field" in which the analysis takes place and a batch-specific bar code, which provides calibration information specific to strips made in a particular batch. (See also U.S. Pat. Nos. 4,510,383 and 4,592,893.) In principle, the process provides a strip whose calibration is "transparent" to the user; i.e., the user is unaware of the calibration step. While that is a highly desirable result, it comes at a high price. The bar code must be printed very precisely, with tight tolerances on the width and spacing of the bars, over the entire length of the web that constitutes a single batch of (uncut) strips. Moreover, the printing must be done in a way that does not change the characteristics of the test field. Furthermore, the meter must have a sophisticated optical system in order to read the tightly-spaced bar code reliably.

U.S. Pat. No. 5,281,395, to Markart et al., discusses the practical problems raised by the strip of Poppe, et al. and addresses some of them with a two-strip system. The "test carrier" contains the reagent for reacting with the analyte to be measured and the "code carrier" has the calibration bar code that is characteristic of a particular batch. Each carrier also has a machine-readable batch identification. This approach reduces the technical difficulties and expense involved in manufacturing the strips of Poppe et al; however, it requires the use of a second strip in order to calibrate the meter.

Connolly, in PCT Application W096/13707, published on May 9, 1996, discloses an apparatus and method for detecting various analytes in body fluids, using dry test strips. In one embodiment, test strips are color coded to identify the test that a particular strip is intended for. Thus, a blue strip may measure glucose and a red strip cholesterol. The colors are divided into shades, for example 64 shades of blue represent 64 different lot numbers of glucose strips. The apparatus has a memory module which stores a lot number. If the lot number measured from the strip doesn't match the lot number in the memory module, the test isn't performed. This approach requires that each batch of test strips have a memory module, which is inserted into the apparatus before the strips of that batch can be used.

Still further, U.S. Patent No. 5,989, 917 to McAleer et al. discloses a meter that reads a calibration code from a test strip container, where the calibration code is in the form of a bar code, magnetic stripe, memory chip or resonant wire loop. However, each of these formats suffers from disadvantages. For example, as described above, a bar code must be printed very precisely, with tight tolerances on the width and spacing of the bars. Moreover, the meter must have a sophisticated optical system having moveable parts to scan across the bar code in order to read the tightly-spaced bar code reliably. Accordingly, such a system increases manufacturing costs.

As such, there is continued interest in the development of new devices and methods for analyte concentration determination that provide easy calibration of the meter. Of particular interest would be the development of such devices and methods that do not place excessive demands on the manufacturing process of either the meter, the analyte concentration measurement device or the analyte concentration measurement device container, and that enables automatic reading or detection of a photometrically readable calibration mark from an analyte concentration measurement device container before calculating analyte concentration, thereby eliminating the manual inputting of the calibration code by the user who may be unaware or forgetful that calibration is needed.

### SUMMARY OF THE INVENTION

Devices for determining the concentration of an analyte in a physiological sample are provided. The subject devices include a calibration means, at least one light source, and a photometric detector array having at least two detectors, (a) at least one calibration detector, and (b) at least one other analyte concentration determination or testing detector. In certain embodiments, one or more of the detectors of the detector array may serve as both a calibration detector and an analyte concentration determination detector. The at least one calibration detector is capable of detecting a photometrically readable calibration mark from an analyte concentration measurement device container for calibrating the analyte concentration determination device based on the detected calibration mark. The at least one other detector is used for detecting reflected light from an analyte concentration measurement device, e.g., a test strip or a hollow frustum device, associated with the analyte concentration determination device for analyte concentration determination. Means for calibrating a component, aspect or feature of the analyte concentration determination device is based on the photometrically readable calibration mark.

The subject invention also includes methods for calibrating an analyte concentration determination device. The subject methods include (1) providing a subject analyte concentration determination device, (2) associating the subject device with a container having a photometrically readable calibration mark, (3) detecting the photometrically readable calibration mark from the container by the at least one calibration detector of the detector array, and (4) calibrating at least one of: at least one light source, at least one detector of the detector array and an algorithm of the analyte concentration determination device, where such calibration is based on the detected photometrically readable calibration mark. Also provided are kits for use in practicing the subject methods.

### BRIEF DESCRIPTION OF THE DRAWINGS

Figure 1 shows an exemplary embodiment of a representative test strip analyte concentration measurement device suitable for use with the subject invention.

Figure 2 shows a cross-sectional view of an exemplary embodiment of a representative container that may be used to store one or more test strips of Figure 1.

Figure 3 shows an exemplary embodiment of a representative hollow frustum analyte concentration measurement device suitable for use with the subject invention.

Figure 4 shows across-sectional view of an exemplary embodiment of a representative container that may be used to contain one or more of hollow frustum analyte concentration measurement devices of Figure 3.

Figures 5-7 show exemplary embodiments of subject analyte concentration determination meters suitable for use with hollow frustum-type analyte concentration measurement devices.

Figure 8 shows an exemplary embodiment of a subject analyte concentration determination meter suitable for use with a test strip-type analyte concentration measurement device.

Figures 9A-9E shows plan views of exemplary embodiments of subject detector array in various configurations.

Figure 10 shows a schematic illustration of an exemplary embodiment of an analyte concentration determination device according to the subject invention.

Figure 11 illustrates an exemplary process whereby a photometrically readable calibration mark positioned on an analyte concentration measurement device container is mated with the subject analyte concentration determination device of Figure 5B in a manner that enables the calibration mark to be detected by the detector array of the analyte concentration determination device.

Figure 12 illustrates an exemplary process whereby a photometrically readable calibration mark positioned on an analyte concentration measurement device container is mated with the subject analyte concentration determination device of Figure 5A in a manner that enables the calibration mark to be detected by the detector array of the analyte concentration determination device.

Figure 13 illustrates an exemplary process whereby a photometrically readable calibration mark positioned on an analyte concentration measurement device container is mated with the subject analyte concentration determination device of Figure 8 in a manner that enables the calibration mark to be detected by the detector array of the analyte concentration determination device.

Figure 14 shows a cross-sectional view taken along lines x-x of Figure 13.

Figure 15 shows a cross sectional view of an exemplary embodiment of a dispensing cartridge with a calibration mark thereon and a plurality of test strips held therein.

Figure 16 shows a cross sectional view of the dispensing cartridge of Figure 15 having a calibration mark C4 positioned thereon and operatively associated with a meter of the subject invention so that the calibration mark may be read by the meter.

Figure 17 shows a cross-sectional view of the dispensing cartridge of Figure 16 being removed from the meter and a single test strip being dispensed from the cartridge so that the test strip is operatively positioned on the meter for analyte concentration determination.

### DETAILED DESCRIPTION OF THE INVENTION

Devices for determining the concentration of an analyte in a physiological sample are provided. The subject devices include a calibration means, at least one light source, and a photometric detector array having at least two detectors, (a) at least one calibration detector, and (b) at least one other analyte concentration determination or testing detector. In certain embodiments, one or more of the detectors of the detector array may serve as both a calibration detector and an analyte concentration determination detector. The at least one calibration detector is capable of detecting a photometrically readable calibration mark from an analyte concentration measurement device container for calibrating the analyte concentration determination device based on the detected calibration mark. The at least one other detector is used for detecting reflected light from an analyte concentration measurement device, e.g., a test strip or a hollow frustum device, associated with the analyte concentration determination device for analyte concentration determination. Means for calibrating a component, aspect or feature of the analyte concentration determination device is based on the photometrically readable calibration mark.

The subject invention also includes methods for calibrating an analyte concentration determination device. The subject methods include (1) providing a subject analyte concentration determination device, (2) associating the subject device with a container having a photometrically readable calibration mark, (3) detecting the photometrically readable calibration mark from the container by the at least one calibration detector of the detector array, and (4) calibrating at least one of: at least one light source, at least one detector of the detector array and an algorithm of the analyte concentration determination device, where such calibration is based on the detected photometrically readable calibration mark. Also provided are kits for use in practicing the subject methods.

Before the present invention is described, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, the preferred methods and materials are now described. All publications mentioned herein are incorporated herein by reference to disclose and describe the methods and/or materials in connection with which the publications are cited.

It must be noted that as used herein and in the appended claims, the singular forms "a", "and", and "the" include plural referents unless the context clearly dictates otherwise. Thus, for example, reference to "a reagent" includes a plurality of such reagents and reference to "the device" includes reference to one or more devices and equivalents thereof known to those skilled in the art, and so forth.

The publications discussed herein are provided solely for their disclosure prior to the filing date of the present application. Nothing herein is to be construed as an admission that the present invention is not entitled to antedate such publication by virtue of prior invention. Further, the dates of publication provided may be different from the actual publication dates which may need to be independently confirmed.

In further describing the subject invention, the subject devices are described first. Next, a description of the subject methods is provided, followed by a review of kits which include the subject devices.

### DEVICES

As mentioned above, the subject invention includes devices for determining the concentration of at least one analyte in a physiological sample applied to an analyte concentration measurement device associated with the subject device. More specifically, analyte concentration determination meters are provided that include a detector array having at least two detectors. At least one detector, i.e., at least a first detector, of the detector array is configured to automatically detect a photometrically readable calibration mark positioned on an analyte concentration measurement device container associated with the subject meter. In this manner, one or more components, features or aspects of the meter is calibrated according to the detected photometrically readable calibration mark so that the meter may provide a calibrated analyte concentration. The remaining detector(s) of the detector array, i.e., at least a second detector, is configured to detect signal from the testing area of the analyte concentration measurement device, whereby a calibrated analyte concentration determination is tailored to a particular analyte concentration measurement device based on a calibration mark on the device's container. As summarized above, one or more of the detectors may be configured to read both the calibration mark from a container and a testing area of an analyte concentration measurement device.

Generally, the subject meters can be characterized as optically-based meters and are configured for associating with an analyte concentration measurement device container (i.e., containers that retain one or more analyte concentration measurement devices such as test strips or hollow frustum devices). The meters are calibrated automatically such that the calibration is specific to the type of analyte concentration measurement device used therewith and the calibration mark positioned on a container housing the analyte concentration measurement device when the meter is operatively positioned with the calibration mark on the container and the calibration mark is "read" by the meter. Such calibration is performed by illuminating the photometrically readable calibration mark positioned on the container and detecting light therefrom using at least one of the detectors of the detector array, where the meters then are automatically calibrated based on this detected photometrically readable calibration mark. As described above, the subject meters are also configured to determine the concentration of an analyte in a sample applied to an analyte concentration measurement device to provide a calibrated analyte measurement based on the detected photometrically readable calibration mark.

The subject invention is suitable for use with a variety of colorimetric, photometric or optical (herein used interchangeably) type analyte concentration measurement devices as are known in the art, where representative analyte concentration measurement devices will be described in greater detail below. Such analyte concentration measurement devices find use in the determination of a wide variety of different analyte concentrations, where representative analytes include, but are not limited to, glucose, cholesterol, lactate, alcohol, bilirubin, hematocrit, and the like. In many embodiments, the analyte concentration measurement devices used with the subject invention are used to determine the glucose concentration in a physiological sample, e.g., interstitial fluid, blood, blood fractions, constituents thereof, and the like.

In further describing the subject invention, a review of representative analyte concentration measurement devices and containers for retaining such analyte concentration measurement devices that may find use with the subject devices is provided first to provide a proper foundation for the subject invention, where such a review is by way of example and is not intended to limit the scope of the invention. The review of representative analyte concentration measurement devices is followed by a description of the subject devices and the subject methods. Finally, a description of kits. for use in practicing the subject methods is provided.

### Representative Test Strip Analyte Concentration Measurement Devices

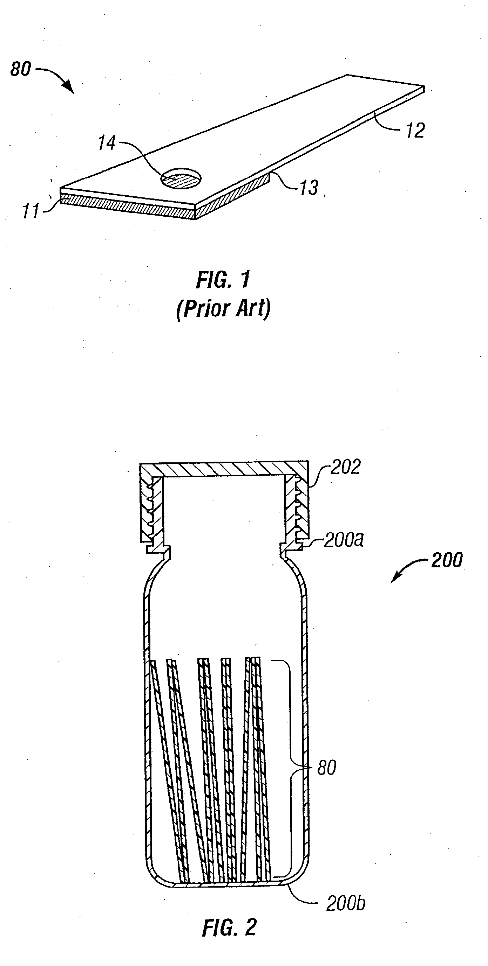

As described above, the subject invention may be used with analyte concentration measurement devices that are configured as test strips or cards. The colorimetric reagent test strips employed in these embodiments of the subject invention are generally made up of at least the following components: a matrix 11 for receiving a sample, a reagent composition (not shown as a structural component) that typically includes one or more members of an analyte oxidation signal producing system and a support element 12. The colorimetric test strips are configured and adapted to be received in an automated meter, as described below, for automatically determining the concentration of an analyte. An exemplary embodiment of a representative colorimetric test strip is shown in Figure 1. Figure 1 shows colorimetric test strip 80 in which matrix 11 is positioned at one end of support element 12 with adhesive 13. A hole 14 is present in support element 12 in the area of matrix 11 in which a sample can be applied to one side of matrix 11 and a reaction can be detected therefrom. Usually, sample is applied to one side of matrix 11 and a reaction is detected at another or opposite side of matrix 11, however, other configurations and methods are possible as well. The components of a representative, exemplary colorimetric test strip will now be described in more detail.

### Matrix

Matrix 11 is made of an inert material which provides a support for the various members of the signal producing system, described below, as well as the light absorbing or chromogenic product, i.e., the indicator, produced by the signal producing system. Matrix 11 is configured to provide a location for the physiological sample, e.g., blood, application and a location for the detection of the light-absorbing product produced by the indicator of the signal producing system. As such, the latter location may be characterized as the testing, detection or measurement area of the test strip. As such, matrix 11 is one that is permissive of aqueous fluid flow through it and provides sufficient void space for the chemical reactions of the signal producing system to take place. A number of different matrices have been developed for use in various analyte detection assays, which matrices may differ in terms of materials, dimensions and the like, where representative matrices include, but are not limited to, those described in U.S. Patent Nos.: 4,734,360; 4,900,666; 4,935,346; 5,059,394; 5,304,468; 5,306,623; 5,418,142; 5,426,032; 5,515,170; 5,526,120; 5,563,042; 5,620,863; 5,573,452; 5,780,304; 5,789,255; 5,843,691; 5,846,486; 5,968,836 and 5,972,294; the disclosures of which are herein incorporated by reference. In principle, the nature of matrix 11 is not critical to the subject test strips and therefore is chosen with respect to other factors, including the nature of the instrument which is used to read the test strip, convenience and the like. As such, the dimensions and porosity of the test strip may vary greatly, where matrix 11 may or may not have pores and/or a porosity gradient, e.g. with larger pores near or at the sample application region and smaller pores at the detection region. The materials from which matrix 11 may be fabricated vary, and include polymers, e.g. polysulfone, polyamides, cellulose or absorbent paper, and the like, where the material may or may not be functionalized to provide for covalent or non-covalent attachment of the various members of the signal producing system.

### Signal Producing System

In addition to matrix 11, the subject test strips further include one or more members of a signal producing system which produces a detectable product in response to the presence of analyte, which detectable product can be used to derive the amount of analyte present in the assayed sample. In the subject test strips, the one or more members of the signal producing system are associated, e.g., covalently or non-covalently attached to, at least a portion of (*i.e*., the detection, testing or measurement area) matrix 11, and in certain embodiments to substantially all of matrix 11.

In certain embodiments, e.g., where glucose is the analyte of interest, the signal producing system is an analyte oxidation signal producing system. By analyte oxidation signal producing system is meant that in generating the detectable signal from which the analyte concentration in the sample is derived, the analyte is oxidized by one or more suitable enzymes to produce an oxidized form of the analyte and a corresponding or proportional amount of hydrogen peroxide. The hydrogen peroxide is then employed, in turn, to generate the detectable product from one or more indicator compounds, where the amount of detectable product generated by the signal measuring system, *i.e*. the signal, is then related to the amount of analyte in the initial sample. As such, the analyte oxidation signal producing systems present in the test strips are also correctly characterized as hydrogen peroxide based signal producing systems.

As indicated above, the hydrogen peroxide based signal producing systems include a first enzyme that oxidizes the analyte and produces a corresponding amount of hydrogen peroxide, i.e., the amount of hydrogen peroxide that is produced is proportional to the amount of analyte present in the sample. The specific nature of this first enzyme necessarily depends on the nature of the analyte being assayed but is generally an oxidase. As such, the first enzyme may be: glucose oxidase (where the analyte is glucose); cholesterol oxidase (where the analyte is cholesterol); alcohol oxidase (where the analyte is alcohol); lactate oxidase (where the analyte is lactate) and the like. Other oxidizing enzymes for use with these and other analytes of interest are known to those of skill in the art and may also be employed. In those preferred embodiments where the reagent test strip is designed for the detection of glucose concentration, the first enzyme is glucose oxidase. The glucose oxidase may be obtained from any convenient source, *e.g.* a naturally occurring source such as Aspergillus niger or Penicillum, or recombinantly produced.

A second enzyme of the signal producing system may be an enzyme that catalyzes the conversion of one or more indicator compounds into a detectable product in the presence of hydrogen peroxide, where the amount of detectable product that is produced by this reaction is proportional to the amount of hydrogen peroxide that is present. This second enzyme is generally a peroxidase, where suitable peroxidases include: horseradish peroxidase (HRP), soy peroxidase, recombinantly produced peroxidase and synthetic analogs having peroxidative activity and the like. See *e.g*., Y. Ci, F. Wang; Analytica Chimica Acta, 233 (1990), 299-302.

The indicator compound or compounds, *e.g*., substrates, are ones that are either formed or decomposed by the hydrogen peroxide in the presence of the peroxidase to produce an indicator dye that absorbs light in a predetermined wavelength range. Preferably the indicator dye absorbs strongly at a wavelength different from that at which the sample or the testing reagent absorbs strongly. The oxidized form of the indicator may be a colored, faintly-colored, or colorless final product that evidences a change in color of the testing side of the membrane. That is to say, the testing reagent can indicate the presence of glucose in a sample by a colored area being bleached or, alternatively, by a colorless area developing color.

Indicator compounds that are useful in the present invention include both one- and two-component chromogenic substrates. One-component systems include aromatic amines, aromatic alcohols, azines, and benzidines, such as tetramethyl benzidine-HCI. Suitable two-component systems include those in which one component is MBTH, an MBTH derivative (see for example those disclosed in EP-A-0 781,350) or 4-aminoantipyrine and the other component is an aromatic amine, aromatic alcohol, conjugated amine, conjugated alcohol or aromatic or aliphatic aldehyde. Exemplary two-component systems are 3-methyl-2-benzothiazolinone hydrazone hydrochloride (MBTH) combined with 3-dirnethylaminobenzoic acid (DMAB); MBTH combined with 3,5-dichloro-2-hydroxybenzene-sulfonic acid (DCHBS); and 3-methyl-2-benzothiazolinonehydrazone N-sulfonyl benzenesulfonate monosodium (MBTHSB) combined with 8-anilino-1 naphthalene sulfonic acid ammonium (ANS). In certain embodiments, the dye couple MBTHSB-ANS is preferred.

In yet other embodiments, signal producing systems that produce a fluorescent detectable product (or detectable non- fluorescent substance, *e.g.* in a fluorescent background) may be employed, such as those described in: Kiyoshi Zaitsu, Yosuke Ohkura: New fluorogenic substrates for Horseradish Peroxidase: rapid and sensitive assay for hydrogen peroxide and the Peroxidase. Analytical Biochemistry (1980) 109, 109-113.

### Support Element

Matrix 11 is usually attached to a support element 12. Support element 12 may be of a material that is sufficiently rigid to be inserted into an automated device such as a meter without undue bending or kinking. Matrix 11 may be attached to support element 12 by any convenient mechanisms, e.g., clamps, adhesive, etc., herein shown attached using an adhesive 13. In many embodiments, support member 12 is made of material such as polyolefins, e.g., polyethylene or polypropylene, polystyrene or polyesters. Consequently, the length of the support element 12 typically dictates or corresponds to the length of the test strip. In the example shown in Figure 1, one support element 12 is employed on one side of matrix 11. However, in certain embodiments, another support element is attached to the other side of matrix 11 so as to "sandwich" the matrix between two support elements.

Regardless of whether or not the length of support element 12 dictates or corresponds to the length of test strip 80, the total length of test strip 80 generally ranges from about 5 mm to about 80 mm, usually from about 15 mm to about 65 mm, the width of test strip 80 typically ranges from about 5 mm to about 20 mm, usually from about 6 mm to about 12 mm and the thickness of test strip 80 typically ranges from about 0.1 mm to about 0.8 mm, usually from about 0.2 mm to about 0.4 mm.

As described above, support element 12 is usually configured to enable test strip 80 to be used with a meter. As such, support element 12, and thus test strip 80, may be in the form of a substantially rectangular or square-like strip, where the dimensions of support element 12 vary according to a variety of factors, as will be apparent to those of skill in the art.

In using such a colorimetric test strip, sample is allowed to react with the members of the signal producing system to produce a detectable product that is present in an amount proportional to the initial amount present in the sample. The amount of sample that is introduced to matrix 11 of the test strip may vary, but generally has a volume ranging from about 0.1 µl to about 25 µl. The sample may be introduced to matrix 11 using any convenient protocol, where the sample may be injected, allowed to wick, or be otherwise introduced. The amount of detectable product, *i.e*., signal produced by the signal producing system, is then determined and related to the amount of analyte in the initial sample. In many embodiments sample is applied to one side or a first side of matrix 11 and the amount of detectable product is then determined at another or second side of matrix 11, where in many embodiments the amount of detectable product is determined on a side opposite the first side. In certain embodiments, automated meters that perform the above mentioned detection and relation steps are employed, as noted above. The above described reaction, detection and relating steps, as well as instruments for performing the same, are further described in U.S. Patent Nos. 4,734,360; 4,900,666; 4,935,346; 5,059,394; 5,304,468; 5,306,623; 5,418,142; 5,426,032; 5,515,170; 5,526,120; 5,563,042; 5,620,863; 5,753,429; 5,573,452; 5,780,304; 5,789,255; 5,843,691; 5,846,486; 5,968,836 and 5,972,294; the disclosures of which are herein incorporated by reference.

Examples of colorimetric reagent test strips that may be used with the subject invention include, but are not limited to, those described in U.S. Patent Nos.: 5,049,487; 5,563,042; 5,753,452; 5,789,255, the disclosures of which are herein incorporated by reference.

The above described test strips may be contained in any convenient container, usually a container that protects the test strips from damage from humidity, etc. Figure 2 shows a cross-sectional view of a representative test strip container 200, as is known in the art that is a simple housing having a plurality of test strips 80 retained therein; however, other test strip containers are known that may be more complex. Test strip container 200 top end 200a through which test strips are dispensed and closed, bottom end 200b. Top end 200a is sealed by cap 202 to provide a sealed, substantially moisture tight environment inside container 200. Representative test strip containers suitable for use with the subject invention are described generally in, but not limited to, U.S. Patent Nos. 4,834,234 and 4,934,556, the disclosures of which are herein incorporated by reference.

### Representative Hollow Frustum Analyte Concentration Measurement Devices

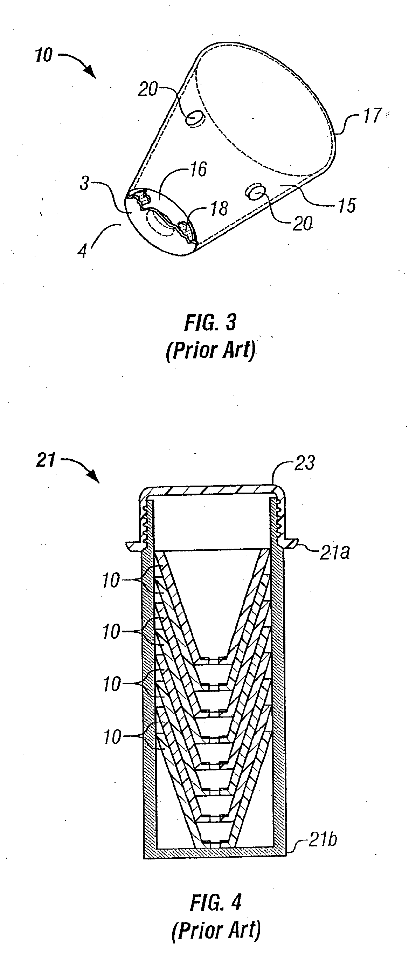

As described above, the subject invention may be used with analyte concentration measurement devices that are configured as hollow frustums. Hollow frustum analyte concentration measurement devices are described generally in U.S. Patent Nos. 5,753,429 and 5,736,103, the disclosures of which are herein incorporated by reference. Figure 3 shows an exemplary embodiment of a representative hollow frustum analyte concentration measurement device 10 that is suitable for use with the subject invention. Such hollow frustum analyte concentration measurement devices are generally made up of at least the following components: a matrix 3 for receiving a sample, a reagent composition (not shown as a structural component) that typically includes one or more members of an analyte oxidation signal producing system and a support element 15 configured as a hollow frustum of a cone or the like.

### Matrix

Matrix 3 is made of an inert material which provides a support for the various members of the signal producing system, described below, as well as the light absorbing or chromogenic product, i.e., the indicator, produced by the signal producing system. Matrix 3 is configured to provide a location for the physiological sample, e.g., blood, application and a location for the detection of the light-absorbing product produced by the indicator of the signal producing system. As such, the latter location may be characterized as the testing, detection or measurement area of the device in that it is the area where from which light is detected to determine analyte concentration, as will be described in greater detail below. Matrix 3 is one that is permissive of aqueous fluid flow through it and provides sufficient void space for the chemical reactions of the signal producing system to take place. A number of different matrices have been developed for use in various analyte detection assays, which matrices may differ in terms of materials, dimensions and the like, where representative matrices include, but are not limited to, those described in U.S. Patent Nos.: 4,734,360; 4,900,666; 4,935,346; 5,059,394; 5,304,468; 5,306,623; 5,418,142; 5,426,032; 5,515,170; 5,526,120; 5,563,042; 5,620,863; 5,753,429; 5,573,452; 5,780,304; 5,789,255; 5,843,691; 5,846,486; 5,968,836 and 5,972,294; the disclosures of which are herein incorporated by reference. In principle, the nature of matrix 3 is not critical to the subject test strips and therefore is chosen with respect to other factors, including the nature of the instrument which is used to read the hollow frustum device, convenience and the like. As such, the dimensions and porosity of the device may vary greatly, where matrix 3 may or may not have pores and/or a porosity gradient, *e.g*. with larger pores near or at the sample application region and smaller pores at the detection region. The materials from which matrix 3 may be fabricated vary, and include polymers, *e.g.* polysulfone, polyamides, cellulose or absorbent paper, and the like, where the material may or may not be functionalized to provide for covalent or non-covalent attachment of the various members of the signal producing system.

### Signal Producing System

In addition to matrix 3, hollow frustum analyte concentration measurement device 10 further includes one or more members of a signal producing system which produces a detectable product in response to the presence of analyte, which detectable product can be used to derive the amount of analyte present in the assayed sample. In the subject test strips, the one or more members of the signal producing system are associated, *e.g.,* covalently or non-covalently attached to at least a portion of (*i.e*., the detection, testing or measurement area) matrix 3, and in certain embodiments attached to substantially all of matrix 3.

In certain embodiments, e.g., where glucose is the analyte of interest, the signal producing system is an analyte oxidation signal producing system. By analyte oxidation signal producing system is meant that in generating the detectable signal from which the analyte concentration in the sample is derived, the analyte is oxidized by one or more suitable enzymes to produce an oxidized form of the analyte and a corresponding or proportional amount of hydrogen peroxide. The hydrogen peroxide is then employed, in turn, to generate the detectable product from one or more indicator compounds, where the amount of detectable product generated by the signal measuring system, *i.e*. the signal, is then related to the amount of analyte in the initial sample. As such, the analyte oxidation signal producing systems present in the hollow frustum analyte concentration measurement devices are also correctly characterized as hydrogen peroxide based signal producing systems.

As indicated above, the hydrogen peroxide based signal producing systems include a first enzyme that oxidizes the analyte and produces a corresponding amount of hydrogen peroxide, i.e., the amount of hydrogen peroxide that is produced is proportional to the amount of analyte present in the sample. The specific nature of this first enzyme necessarily depends on the nature of the analyte being assayed but is generally an oxidase. As such, the first enzyme may be: glucose oxidase (where the analyte is glucose); cholesterol oxidase (where the analyte is cholesterol); alcohol oxidase (where the analyte is alcohol); lactate oxidase (where the analyte is lactate) and the like. Other oxidizing enzymes for use with these and other analytes of interest are known to those of skill in the art and may also be employed. In those embodiments where the hollow frustum analyte concentration measurement device is designed for the detection of glucose concentration, the first enzyme is glucose oxidase. The glucose oxidase may be obtained from any convenient source, *e.g*. a naturally occurring source such as Aspergillus niger or Penicillum, or recombinantly produced.

A second enzyme of the signal producing system may be an enzyme that catalyzes the conversion of one or more indicator compounds into a detectable product in the presence of hydrogen peroxide, where the amount of detectable product that is produced by this reaction is proportional to the amount of hydrogen peroxide that is present. This second enzyme is generally a peroxidase, where suitable peroxidases include: horseradish peroxidase (HRP), soy peroxidase, recombinantly produced peroxidase and synthetic analogs having peroxidative activity and the like. See *e.g*., Y. Ci, F. Wang; Analytica Chimica Acta, 233 (1990), 299-302.

The indicator compound or compounds, *e.g*., substrates, are ones that are either formed or decomposed by the hydrogen peroxide in the presence of the peroxidase to produce an indicator dye that absorbs light in a predetermined wavelength range. Preferably the indicator dye absorbs strongly at a wavelength different from that at which the sample or the testing reagent absorbs strongly. The oxidized form of the indicator may be a colored, faintly-colored, or colorless final product that evidences a change in color of the testing side of the membrane. That is to say, the testing reagent can indicate the presence of glucose in a sample by a colored area being bleached or, alternatively, by a colorless area developing color.

Indicator compounds that are useful in the present invention include both one- and two-component chromogenic substrates. One-component systems include aromatic amines, aromatic alcohols, azines, and benzidines, such as tetramethyl benzidine-HCI. Suitable two-component systems include those in which one component is MBTH, an MBTH derivative (see for example those disclosed in EP-A-0 781,350), - or 4-aminoantipyrine and the other component is an aromatic amine, aromatic alcohol, conjugated amine, conjugated alcohol or aromatic or aliphatic aldehyde. Exemplary two-component systems are 3-methyl-2-benzothiazolinone hydrazone hydrochloride (MBTH) combined with 3-dimethylaminobenzoic acid (DMAB); MBTH combined with 3,5-dichloro-2-hydroxybenzene-sulfonic acid (DCHBS); and 3-methyl-2-benzothiazolinonehydrazone N-sulfonyl benzenesulfonate monosodium (MBTHSB) combined with 8-anilino-1 naphthalene sulfonic acid ammonium (ANS). In certain embodiments, the dye couple MBTHSB-ANS is preferred.

In yet other embodiments, signal producing systems that produce a fluorescent detectable product (or detectable non- fluorescent substance, *e.g*. in a fluorescent background) may be employed, such as those described in: Kiyoshi Zaitsu, Yosuke Ohkura: New fluorogenic substrates for Horseradish Peroxidase: rapid and sensitive assay for hydrogen peroxide and the Peroxidase. Analytical Biochemistry (1980) 109, 109-113.

### Support Element

As mentioned above, matrix 3 is usually attached to a hollow frustum shaped support element 15. Support element 15 may be of a material that is sufficiently rigid to enable association of the device 10 with an automated device such as a meter without undue bending, buckling or kinking. Support element 15 can be characterized by having a smaller end 4 and a larger end 17, where matrix 3 is typically attached to the smaller end 4, on the outside of device 10 or on the inside of device 10. Optional lip or surface 16 provides a surface to which matrix 3 is attached using any convenient means such as adhesive 18 or the like. Optional indentations 20 are spaced around the circumference of the cone to provide a retention mechanism in conjunction with a groove or slot on a meter.

The above described hollow frustum devices may be contained in any convenient container, usually a container that protects the hollow frustum devices from damage such as humidity, etc. Typically, the hollow frustum analyte concentration measurement devices are stacked or nested in a container. Figure 4 shows a cross-sectional view of a representative frustum analyte concentration measurement device container 21, as is known in the art, that is a simple housing having a plurality of hollow frustum analyte concentration measurement devices 10 retained therein, in a nesting or stacking configuration. Hollow frustum analyte concentration measurement device container 21 has top end 21a through which frustum analyte concentration measurement devices are dispensed and closed, bottom end 21b. Top end 21a is sealed by cap 23 to provide a sealed, substantially moisture tight environment inside container 21. It will be apparent that other hollow frustum analyte concentration measurement device containers may be employed such as containers that are more complex.

### The Optical Analyte Concentration Determination Devices

As summarized above, the subject invention provides optical analyte concentration determination devices, i.e., optical meters, for use with analyte concentration measurement devices for determining the concentration of at least one analyte in a physiological sample applied to the analyte concentration measurement device.

The optical meters of the subject invention at least include at least one light source for illuminating a photometrically readable mark on an analyte concentration measurement device container and for illuminating the testing or measurement area of a test strip that is associated or mated with the meter (where the light source may be the same or different), a detector array made-up of at least two detectors, at least one calibration detector configured to detect light corresponding to the photometrically readable calibration mark and at least one other detector configured to detect reflected light from the testing area of an analyte concentration measurement device, where one or more detector may be configured to detect light corresponding to the photometrically readable calibration mark and to detect reflected light from the testing area of an analyte concentration measurement device. The subject meters also include means for calibrating at least one component, aspect or feature of the meter based on the detected photometrically readable calibration mark and means for determining a calibrated concentration of at least one analyte in the physiological sample applied to the analyte concentration measurement device. In further describing the subject invention, hollow frustum analyte concentration measurement devices and containers configured to contain such hollow frustum devices, such as of the types described above, will oftentimes be used herein as exemplary devices and containers suitable for use with the subject invention. It is understood that this is by way of example only and is in no way intended to limit the scope of the subject invention. That is, it will be apparent that a wide variety of analyte concentration measurement devices and containers configured to contain such analyte concentration measurement devices such as test strips and corresponding containers for test strips may be used with the subject invention.

The size of the subject meters will vary depending on a variety of factors such as the size of the analyte concentration measurement devices used with the meters, the shape of the analyte concentration measurement devices, etc. However generally, the meters of the subject invention are small enough to be portable or easily moveable. By way of example, the length of a subject meter typically ranges from about 50 mm to about 150 mm and more usually from about 60 mm to about 100 mm, the width typically ranges from about 40 mm to about 100 mm and more usually from about 60 mm to about 90 mm and the thickness or diameter typically ranges from about 10 mm to about 30 mm and more usually from about 15 mm to about 25 mm.

Likewise, the shape of the subject meters will vary, where the shape may range from simple to complex. In many embodiments, the subject meters will assume a circular, oblong, oval, square or rectangular shape, although other shapes are possible as well, such as irregular or complex shapes.

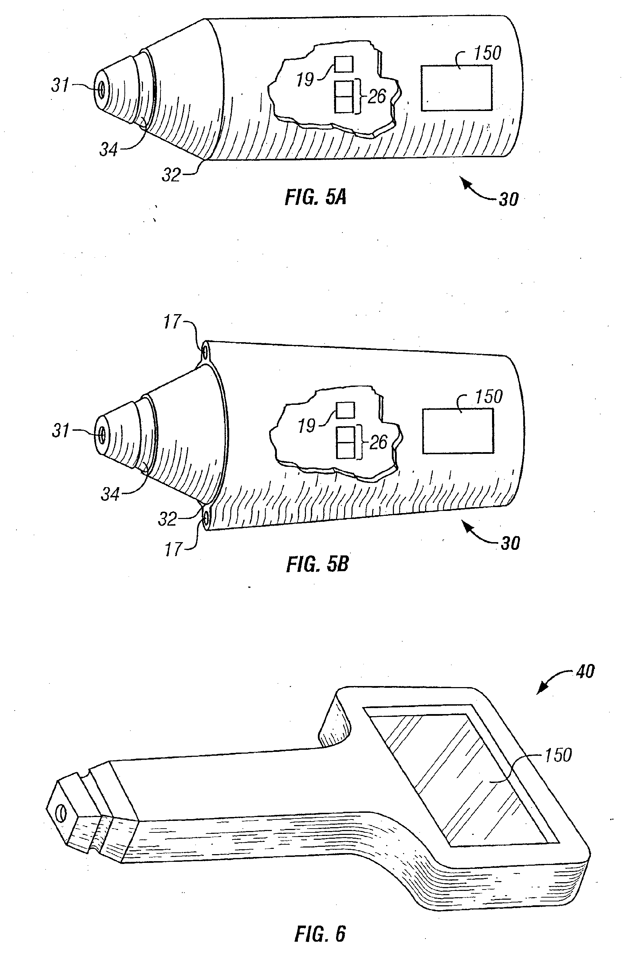

The subject meters will now be further described with reference to the Figures, where like numerals represent like components or features. A perspective view of an exemplary embodiment of a subject analyte concentration determination meter 30 is shown in Figure 5A. In this embodiment, meter 30 has an elongated configuration with a distal section 32 that is a substantially cylindrically symmetrical frustum configured to mate with an analyte concentration measurement device container such as the type of container described above. Distal section 32 is configured to mate with a hollow frustum analyte concentration measurement device, such as analyte concentration measurement device 10 described above, such that a hollow frustum analyte concentration measurement device nests on or is coupled to distal section 32, usually by the engagement of indentations on the analyte concentration measurement device with grooves 34 of the meter (in certain embodiments, optional slots may be present in place of grooves 32). Also shown in a cut-away view are at least one light source 19 and detector array 26. In use, light is projected through aperture 31 onto the calibration mark of the container and the testing area of a hollow frustum analyte concentration measurement device operatively aligned with the meter and light from the calibration mark and the testing area is reflected back through aperture 31 to detector array 26.

Meter 30 also includes display 150 for depicting error messages and the analyte concentration determined by the meter. The display can be a light emitting diode (LED) display, a liquid crystal display (LCD), audio communication means or similar display or communication means well known in the art.

Figure 5B shows the meter of figure 5A having one or more windows 17 positioned on the sides thereof through which one or more calibration marks on a container are detected. That is, in certain embodiments, light is projected through one or more windows 17 onto at least one calibration mark positioned on a hollow frustum analyte concentration measurement device container operatively aligned with the meter and light from the calibration mark is reflected back through the one or more windows 17 to detector array 26.

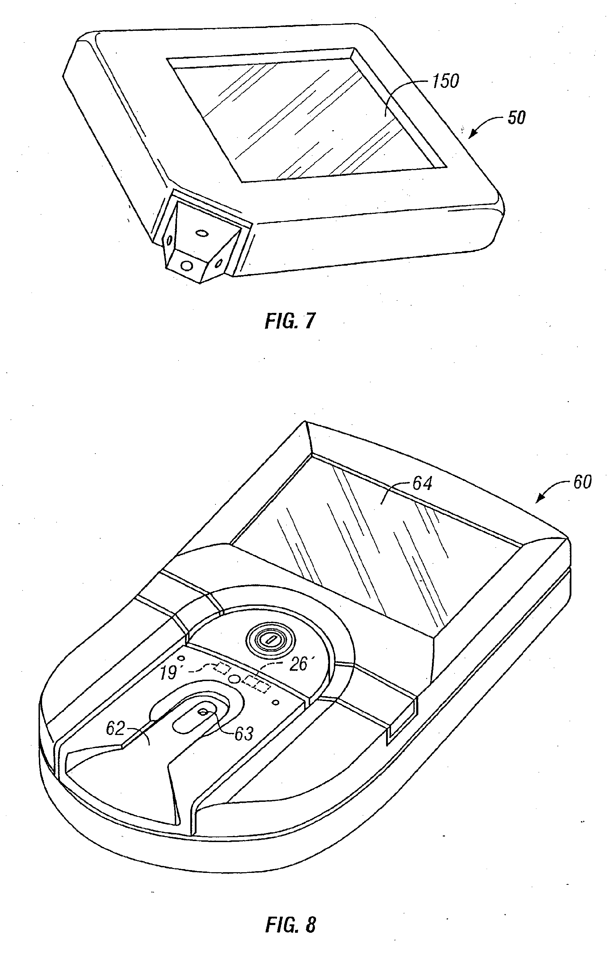

Figures 6 and 7 show exemplary embodiments of alternative meters, meter 40 and meter 50, for use with a hollow frustum analyte concentration measurement device and corresponding container.

Figure 8 shows an exemplary embodiment of a subject meter 60 for use with a test strip, such as the type of test strip described above. Meter 60 has display 64 for depicting error messages and the analyte concentration determined by the meter. The display can be a light emitting diode (LED) display, a liquid crystal display (LCD), audio communication means or similar display or communication means well known in the art. In use, a test strip is operatively positioned in test strip receiving area 62. Operatively positioned within meter 60, in operative relation to aperture 63, are at least one light source 19' and a detector array 26', shown here in phantom.

In all such embodiments of the subject invention, the subject meter is configured to mate or otherwise associate with an analyte concentration measurement device container that retains at least one analyte concentration measurement device, where the container and the meter are mated in a manner sufficient for a photometrically readable calibration mark present on the container to be detected by at least one detector of a detector array, as will be described in greater detail below. In further describing the invention, meter 30 will be used for exemplary purposes, where such exemplary purposes are in no way intended to limit the scope the invention.

The subject meters include at least one light source 19 which is configured to project light onto a photometrically readable calibration mark positioned on an analyte concentration measurement device container. The same or a different light source is also employed to project light onto an area of an analyte concentration measurement device, e.g., a matrix and more specifically the testing area of the matrix, having sample applied thereto and which has reagents for reacting with certain analytes in the sample, as described above. Light source 19 typically includes a light emitting diode (LED) or any other convenient light source such as a laser diode, a filtered lamp, and the like. Usually, the light source contains two LED sources or a single diode capable of emitting two distinct wavelengths of light. Light source is usually capable of emitting light of wavelengths ranging from about 400 nm to about 1000 nm, where the wavelength(s) of light used to illuminate the calibration mark may be the same or different wavelength(s) used to illuminate the testing area of an analyte concentration measurement device. Commercially available light sources that produce wavelengths of light described above include, but are not limited to, those provided by OSRAM Sylvania, Inc., LEDtronics, Inc., Agilent technologies, Inc., and Stanley Electric Sales of America.

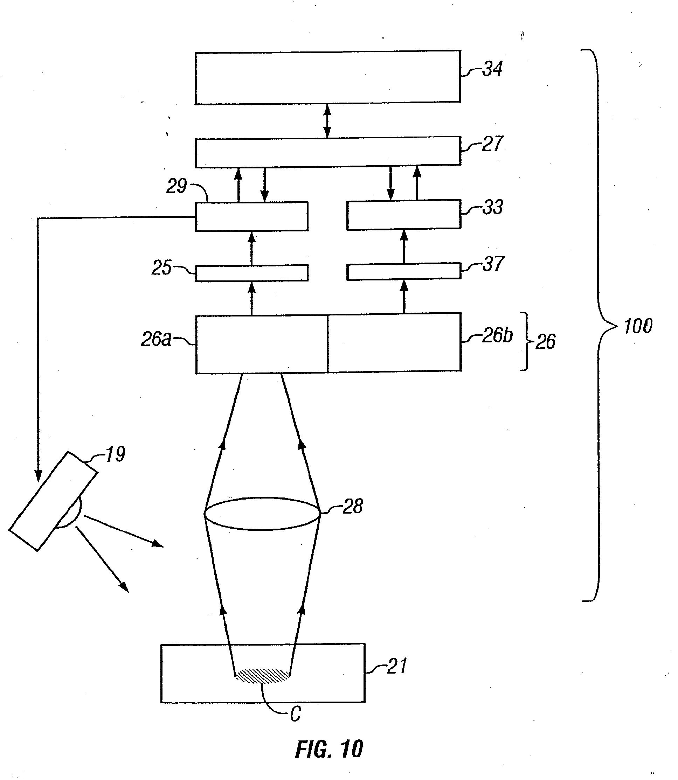

The subject meters also include a detector array 26 made-up of at least two detectors: at least a first, calibration detector 26a and at least a second, testing detector 26b (for detecting light from a testing are of an analyte concentration measurement device, as illustrated schematically in Figure 10, where in many embodiments one or more of the detectors may serve as both a calibration detector and a testing detector.

The number of detectors that make-up the detector array may be as great as about three detectors or more, where in certain embodiments about four detectors or more are present (e.g., configured in a 2X2 arrangement). For example, the number of detectors may range from at least 2 detectors to about 100 or more detectors. In certain embodiments, the number of detectors may be a great as about 100 to about 1000 detectors or greater, i.e., thousands of detectors may be used. Generally, the number of detectors employed will vary depending on the size and shape of the testing area of the analyte concentration measurement device, the space constraints of the meter, spatial resolution, etc.

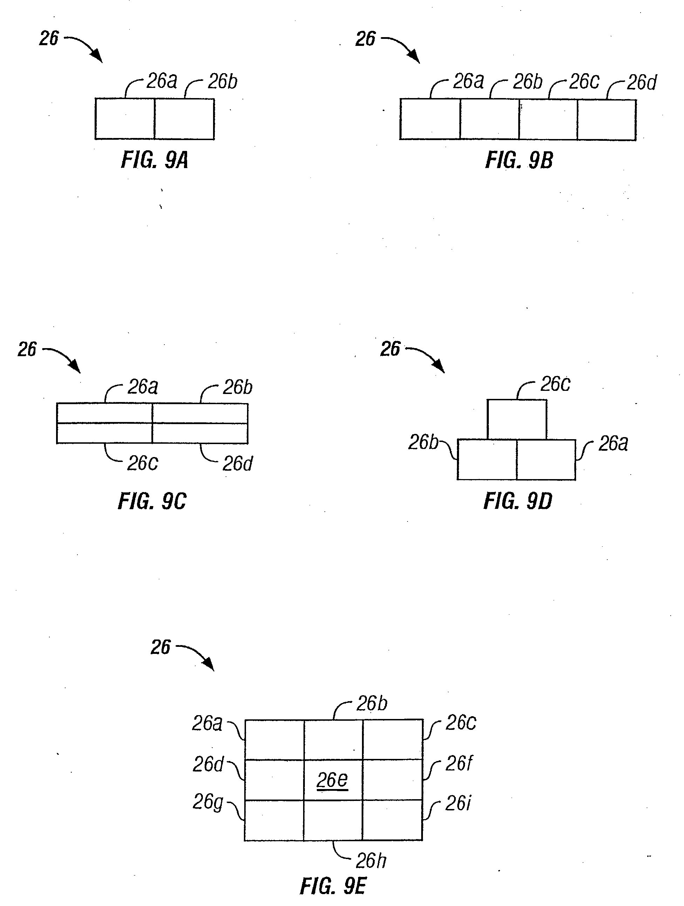

The configuration of the detectors that make up the detector array may vary according to a variety of factors such as the size and shape of the testing area of the analyte concentration measurement device, the position of the photometrically readable calibration mark on the container, and the like, however the detector array is configured as a single unit made of at least two detectors with at least one detector of the array configured to detect a photometrically readable calibration mark from a container. That is, the detectors are associated together to form one piece or one component, e.g., in a linear arrangement, triangular arrangement or a matrix or grid-type arrangement or pattern. Figures 9A-9E show exemplary embodiments of the subject detector array 26 having a variety of detectors 26a-26N which are in a variety of configurations, where such configurations are exemplary only and are in no way intended to limit the scope of the invention.

Accordingly, Figure 9A shows two detectors, a first detector 26a and a second detector 26b configured in a 2 x 2 arrangement, where at least one of either the first detector 26a or the second detector 26b is configured to detect a photometrically readable calibration mark from a container and the remaining detector is configured to detect light from the matrix or testing area of an analyte concentration measurement device. In certain embodiments, one or both of detector 26a and detector 26b is configured to detect a photometrically readable calibration mark from a container and a matrix.

Figure 9B shows another embodiment having four detectors, a first detector 26a, a second detector 26b, a third detector 26c and a fourth detector 26d, configured in a linear arrangement, where at least one of either the first detector 26a, the second detector 26b, the third detector 26c or the fourth detector 26d is configured to detect a photometrically readable calibration mark from a container and the remaining detectors are configured to detect light from the matrix or testing area of an analyte concentration measurement device. In certain embodiments, one or more of detector 26a, 26b, 26c, and 26d is configured to detect a photometrically readable calibration mark from a container and a matrix.

Figure 9C shows another embodiment having four detectors, a first detector 26a, a second detector 26b, a third detector 26c and a fourth detector 26d, configured in a matrix-type or grid-like arrangement, where at least one of either the first detector 26a, the second detector 26b, the third detector 26c or the fourth detector 26d is configured to detect a photometrically readable calibration mark from a container and the remaining detectors are configured to detect light from the matrix or testing area of an analyte concentration measurement device. In certain embodiments, one or more of detector 26a, 26b, 26c, and 26d is configured to detect a photometrically readable calibration mark from a container and a matrix.

Figure 9D shows another embodiment having three detectors, a first detector 26a, a second detector 26b and a third detector 26c, configured in a triangular or non-linear arrangement, where at least one of either the first detector 26a, second detector 26b, or third detector 26c is configured to detect a photometrically readable calibration mark from a container and the remaining detectors are configured to detect light from the matrix or testing area of an analyte concentration measurement device. In certain embodiments, one or morel of detector 26a, 26b, and 26c is configured to detect a photometrically readable calibration mark from a container and a matrix.

Figure 9E shows yet another embodiment of having nine detectors, a first detector 26a through a ninth detector 26i, configured in a matrix or grid-type arrangement, where at least one of the detectors is configured to detect a photometrically readable calibration mark from a container and the remaining detectors are configured to detect light from the matrix or testing area of an analyte concentration measurement device. In certain embodiments, one or more of detector 26a through 26i is configured to detect a photometrically readable calibration mark from a container and a matrix.

As is apparent, the number of individual detectors and the configuration thereof employed to make up a subject detector array may vary as appropriate, e.g., may vary depending on the shape of the analyte concentration measurement device container and the positioning of the mark thereon, the number of testing areas of the analyte concentration measurement device, etc. Each detector of detector array 26 is capable of detecting or intercepting light, e.g., diffusely reflected light, such that the detectors are photodetectors.

A feature of the subject invention is that at least one detector of the detector array is capable of detecting light, e.g., diffusely reflected light, from an analyte concentration measurement device container, where such light is reflected due to the light source irradiating the photometrically readable calibration mark of the container. In this regard, the at least one detector that detects light associated with a photometrically readable calibration mark may also be referred to as a calibration detector, where a detector that detects light from a testing area may also be referred to as a testing detector. It is to be understood that the only limitation is that at least one detector of the detector array is configured to detect the calibration mark from the container and at least one other detector is configured to detect light from a testing area, where in many embodiments more than one of the detectors of the detector array are configured to detect the calibration mark from the container and more than one other detector may be configured to detect light from the testing area, where some or all of the detectors may be configured to detect the calibration mark from the container and the testing area.

Accordingly, the photometrically readable calibration mark is a distinct optically readable mark positioned on a container, where each distinct mark indicates a distinct, respective calibration parameters used by the subject meter. The photometrically readable calibration mark may be made distinctive using any convenient manner. For example, a photometrically readable calibration mark may be distinctive based on size, shape, the number of marks that make-up a calibration mark, wavelength of detectable light therefrom, hue, shading, the position thereof, etc., and any combination thereof. For example, the calibration mark may be a gradation of color or shading or hues, or may encompass a particular pattern of a mark or a pattern of a plurality of marks, such as a number and/or letter or the like or may be a series of distinct marks, or any combination of the above. As is apparent, the use of a plurality of calibration detectors, instead of a single calibration detector, advantageously enables the detection of such a wide variety of distinct calibration marks.

The at least one calibration detector detects light from a position on an analyte concentration measurement device container that includes a photometrically readable calibration mark appropriate for the lot of analyte concentration measurement devices contained in the container. As such, the at least one calibration detector is one that has suitable resolution to adequately detect the photometrically readable calibration mark so that a calibration code may be indicated therefrom by the meter. The size and shape of the area detected by the at least one calibration detector will vary depending on a variety of factors such as the size of the photometrically readable calibration mark, the particular detector employed, etc.

As illustrated schematically in Figure 10 with reference to exemplary subject meter 100, the subject meters also includes imaging optics 28 or one or more light pipes for imaging reflected light from specific areas onto specific, respective detectors. Imaging optics 28 is configured to image light from a photometrically readable calibration mark C positioned on a container such as container 21 onto at least one calibration detector, shown here as one detector or a first detector 26a. Imaging optics 28 may take the form of one or more lenses, light pipes, or mirrors or combination thereof. The same or different imaging optics may also be used to image reflected light from a testing area of an analyte concentration measurement device onto the appropriate detector(s), shown here as testing detector or second detector 26b.

The subject meters thus also include means 29 for calibrating a meter based on the particular photometrically readable calibration mark detected by the at least one calibration detector 29. Calibration means 29 is generally a digital integrated circuit under the control of a software program and thus is suitably programmed to execute all of the steps or functions required of it to receive signal from the at least one calibration detector 26a, relate the received signal to particular calibration code, and carry out all the steps necessary to provide a calibrated analyte concentration measurement based on the calibration parameters indicated by the calibration mark. In other words, calibration means 29 is capable of executing or following an algorithm stored in the meter for calibrating the meter based on a detected calibration mark. For example, the calibration mark may require the meter to calibrate one or more components, aspects or features thereof or to use a particular calibration or correction value in the analyte concentration determination computation. Integrated digital circuit 29 usually reads the output of a signal conversion element such as analog/digital converter 25 which converts an analog signal from a detector of the detector array to a digital signal. Accordingly, calibration means 29 is capable of carrying out all the steps necessary to provide a calibrated analyte concentration measurement based on a detected photometrically readable calibration mark specific to the analyte concentration measurement device used with the meter.

Means 29 is thus capable of calibrating the meter in a number of ways, depending on the calibration code, i.e., depending on the particular requirements of the analyte concentration measurement device to be used with the meter. That is, the calibration means is capable of calibrating or adjusting one or more components, etc., of the meter to provide an accurate, i.e., calibrated analyte concentration measurement. For example, the calibration means is capable of calibrating one or more of the following: (1) the light source, e.g., the intensity of light, the duration of light, depth, etc., (2) the photometric detector(s), e.g., gain, offset, etc., (3) the imaging optics, e.g., positioning, focus, etc., (4) the microprocessor(s), e.g., the algorithm used to compute analyte concentration, etc., and the like. By calibrating an algorithm is meant any adjustment, change or modification to an algorithm including, but not limited to, selecting an appropriate algorithm, modifying an algorithm for example an existing algorithm, incorporating a variable into an algorithm, etc., or any such adjustment or selection of an algorithm as is necessary to provide a calibrated analyte concentration measurement, i.e., an analyte concentration measurement that is more accurate than one determined without calibration.

In addition to the above described means for calibrating a meter based on the particular photometrically readable calibration mark detected by the calibration detector, the subject meters also include means 33 for determining the concentration of an analyte in the sample based on the reflected light detected from the testing area of the matrix of an analyte concentration measurement device 33. Analyte concentration determination means 33 is generally a digital integrated circuit 33 under the control of a software program and thus is suitably programmed to execute all of the steps or functions required of it, or any hardware or software combination that will perform such required functions. That is, analyte concentration determination means 33 is capable of executing or following an algorithm stored in the meter to determine the concentration of an analyte in a sample. (Digital integrated circuit 33 is shown in figure 10 as a separate component from digital integrated circuit 29, but in certain embodiments means for calibration 29 and means for determining the concentration of an analyte 33 may be the same integrated circuit.). Integrated digital circuit 33 usually reads the output of a signal conversion element such as analog/digital converter 37 which converts an analog signal from a detector of the detector array to a digital signal. Accordingly, integrated circuit 33 is capable of carrying out all the steps necessary to determine a calibrated analyte concentration measurement. In certain embodiments, this means is capable of using the photometrically readable calibration mark, together with signal detected from testing area of the analyte concentration measurement device, to compute analyte concentration.

Program and data memory 34 may be a digital integrated circuit that stores data and the microprocessor(s) operating program. For example, program and data memory 34 may store calibration information relating to particular photometrically readable calibration marks. Reporting device 34 may take various hard copy and soft copy forms. Usually it is a visual display such as a liquid crystal display (LCD) or light emitting diode (LED) display, but it may also be a tape printer, audible signal, or the like.

### METHODS

The subject invention also provides methods for determining the concentration of an analyte in a physiological sample applied to a test strip. Specifically, the subject invention provides methods for determining a calibrated concentration measurement value of an analyte in a physiological sample applied to an analyte concentration measurement device. It will be apparent that the order of steps of the subject methods described herein may be altered or modified, where the order provided herein is for exemplary purposes only and is in no way intended to limit the scope of the invention.

Generally, a subject device, as described above, is provided and associated with an analyte concentration measurement device container carrying a photometrically readable calibration mark. At least one detector of a detector array detects the photometrically readable calibration mark from the analyte concentration measurement device container. The photometrically readable calibration mark is used for calibrating one or more components, aspects or features of the meter and/or used, together with reflected signal detected from the testing area of the analyte concentration measurement device, to calculate an analyte concentration, e.g., the photometrically readable calibration mark may be incorporated into the algorithm used to determine analyte concentration, i.e., the calibration mark may indicate a value that is incorporated into the calculations used to determine the concentration of an analyte.

Accordingly, a feature of the subject methods is that at least one detector of a detector array is used to detect a photometrically readable calibration mark positioned on a container while the remaining detector(s) of the array are used to detect signals from the testing area of an analyte concentration measurement device for analyte concentration determination, where in certain embodiments one or more detectors of the detector array detect light from both a container and a testing area. In this manner, a user of the device need not be involved or even aware of the calibration process, i.e., calibration may be performed automatically.

To detect a photometrically readable calibration mark positioned on a container, the meter is first suitably associated with the container having the mark. By suitably associated is meant any alignment, coupling, mating, etc., that positions the calibration detector of the meter and the calibration mark of the container in a workable or appropriate alignment such that the calibration detector of the detector array may read the mark from the container. The manner in which a container and meter may be associated will vary depending on a variety of factors such as the particular meter and container used.

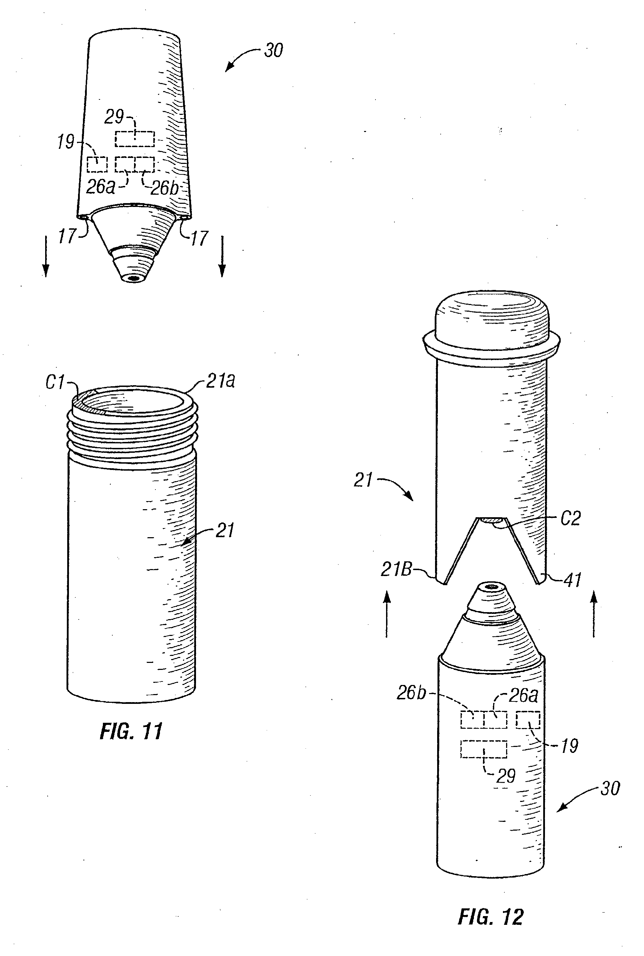

Figure 11 illustrates the process whereby an analyte concentration measurement device container, such as container 21 of Figure 4, having a photometrically readable calibration mark positioned on the surface of the container is mated with a meter such as meter 30 of Figure 5B. As shown in Figure 11, distal end 32 of meter 30 is inserted into the top, open end of container 21. Photometrically readable mark C1, in this embodiment, is positioned on the top surface of end 21a, however the calibration mark may be positioned elsewhere on container 21 as will be apparent. In this embodiment, as meter 30 is being inserted into container 21, at least one calibration detector automatically detects mark C1 by illuminating the mark with light and detecting the light therefrom using at least one detector of the detector array. In many embodiments, the meter and container mate by snap-fit, friction, threads, etc.

This method may conveniently be employed to remove an analyte concentration measurement device from the container during the same step as calibration by securing an analyte concentration measurement device contained in the container on distal end 32 of meter 30 simply by engaging groove 34 and indentions 20 while the distal end of the meter is inside the container. Accordingly, the steps involved in analyte testing are reduced as detection of the calibration mark and positioning of the analyte concentration measurement device are performed in a single step.

In another embodiment illustrated in Figure 12, container 21 has photometrically readable calibration mark C2 positioned on the exterior thereof, shown here as positioned on an indented or inwardly biased bottom wall 41 of end 21b. In this manner, meter 30 of Figure 5A is mated with bottom wall 41, e.g., frictionally mated, snap-fit, threadably mated, etc. Once mated together, calibration detector 26a detects photometrically readable calibration mark C2, as described above.

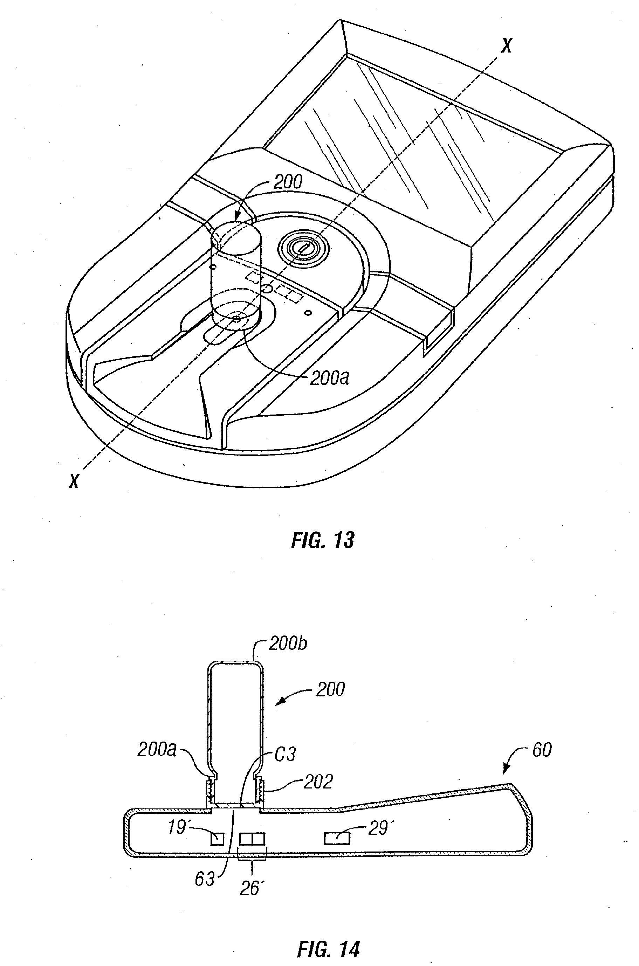

Figure 13 shows calibration mark detection using a meter configured to read a test strip. Meter 60 is thus mated with test strip container 200, where container 200 has calibration mark C3 positioned on the exterior of cap 202 (see figure 14), for example. Once mated, light illuminates calibration mark C3 and light is detected therefrom by at least one detector of the detector array. Container 200 may be mated with meter 60 using any convenient means such as friction, snap-fit, etc. Figure 14 shows a cross-section taken along lines x-x of Figure 13.

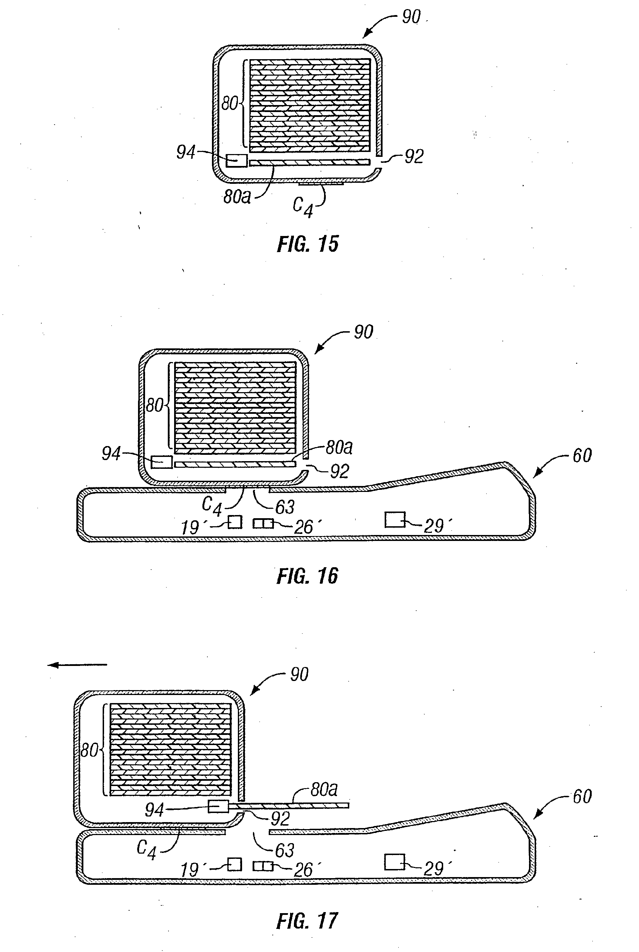

In certain embodiments, the container housing the analyte concentration measurement device(s) is a cartridge or casing that also serves as a dispenser, for example a cartridge retaining a plurality of test strips. A cross section of an exemplary embodiment of such a dispensing cartridge 90 is shown in Figure 15. In use, a single test strip 80a is dispensed from cartridge 90 through dispensing outlet 92 from amongst a plurality of tests trips 80 held therein for use, where such may be accomplished automatically for example when the dispenser is operatively associated or mated with a meter or manually for example as a result of some simple user action, e.g., the motions could occur when a user pushes a button on the dispenser or the like. As such, cartridge 90 includes a test strip movement element 94 for moving a single test strip out of dispensing outlet 92, where movement element may employ any convenient mechanism such as a spring mechanism or the like.

Figure 16 shows a cross section of cartridge 90 having calibration mark C4 thereon and operatively mated with meter of Figure 8 so that calibration mark C4 may be illuminated with light from at least one light source 19' and reflected light may be detected therefrom by at least one calibration detector of detector array 26'. Once calibration mark C4 is detected, test strip 80a is dispensed such that it is operatively associated with meter 60 so that it may be illuminated with light and reflected light may be detected therefrom by at least one detector of detector array 26' for analyte concentration determination. Typically, test strip 80a is dispensed automatically from cartridge 90, actuated by the removal of cartridge 90 from meter 60, as shown in Figure 17. As shown in Figure 17, as cartridge 90 is removed from meter 60 in the direction of the arrows, test strip 80 is pushed out of cartridge 90 and operatively aligned with meter 60. Such methods advantageously ensure that the test strip that is dispensed and aligned for use with the meter is one which is related to the calibration mark on the cartridge that has just been read by the meter. In other words, because a test strip is automatically dispensed from the cartridge when the cartridge is removed, the test strip positioned with meter 60 to be used will be one that is correlated with the calibration mark read by meter 60. Such action may also be accomplished by the user, as will be apparent, such as by the user pushing a button or the like on the exterior of meter 60 to dispense a test strip and operatively position the test strip with the meter.

In all embodiments, the calibration mark may be positioned elsewhere on a container or cartridge. As such, the meters described above may include more than one aperture such that light may be illuminated and detected through a first aperture for detecting a calibration mark and light may be illuminated and detected through a second aperture for detecting light from a testing area of a test strip. In such embodiments, imaging optics or one or more light pipes may be used to direct, focus or image light through an appropriate aperture, etc.

In all embodiments, once a meter is suitably associated with a container, the photometrically readable calibration mark is detected by a detector of the detector array. As such, light illuminates the mark and the light reflected (or absorbed) therefrom is detected by the calibration detector, as mentioned above. Light of any suitable wavelength may be used to illuminate the calibration mark, where such wavelength is dependent upon the type of calibration mark, the type of detector, etc., where wavelengths of light ranging from about 400 nm to about 1000 nm are typically used. In certain embodiments, light of more than one wavelength is used to illuminate the photometrically readable calibration mark.

Once light is detected by the calibration detector to provide a detected calibration signal that is related to particular calibration parameters or settings of one or more components, features or aspects of the meter. That is, one or more components, aspects or features of the meter is calibrated or adjusted based on the calibration mark identified as corresponding to the particular analyte concentration measurement device to provide an accurate, i.e., calibrated, analyte concentration measurement. For example, one or more of the following may be calibrated according to the calibration code: (1) the light source, e.g., the intensity of light, the duration of light, depth, etc., (2) one or more of the photometric detector(s), e.g., gain, offset, etc., (3) the imaging optics, e.g., positioning, focus, etc., (4) the microprocessor(s), e.g., the algorithm used to compute analyte concentration, etc., and the like. By calibrating an algorithm is meant any adjustment, change or modification to an algorithm including, but not limited to, selecting an appropriate algorithm, modifying an algorithm such as an existing algorithm, incorporating a variable into an algorithm, etc., or any such adjustment or selection of an algorithm as is necessary to provide a calibrated analyte concentration measurement, i.e., an analyte concentration measurement that is more accurate than one determined without calibration. For example, in one embodiment, meter calibration includes determining, based upon a calibration code, an appropriate variable or value to be use in an analyte concentration determination algorithm or calculation employed by the meter to compute analyte concentration.

During or after the meter has been calibrated, e.g., a light source modified and/or an analyte concentration measurement device specific variable has been determined, etc., if necessary, the meter is disassociated from the container. If not already performed, an analyte concentration measurement device is associated with the meter, either before or after physiological sample application thereto.

More specifically, physiological sample is applied to an area, e.g., the matrix, of an analyte concentration measurement device, i.e., an analyte concentration measurement device that corresponds to the calibration code used to calibrate the meter, such that sample reacts with the members of the signal producing system of the matrix to produce a detectable product that is present in an amount proportional to the initial amount present in the sample, as described above. The amount of sample that is introduced may vary, but generally ranges from about 0.1 to 25 µl, usually from about 5 to 10 µl. The sample may be introduced to the appropriate area of the analyte concentration measurement device using any convenient protocol, where the sample may be injected, allowed to wick, or be otherwise introduced.

Accordingly, once the meter has been appropriately calibrated according to calibration parameters representative of the analyte concentration measurement device used, sample is applied to the analyte concentration measurement device, e.g., the matrix, the analyte concentration measurement device is associated with the meter and the area is illuminated with light, usually with light of one or more wavelengths, where the order of some or all of the above-described steps may be reversed as appropriate. (It will be apparent that the methods may be easily modified to detect light transmitted through the matrix rather than light reflected from the matrix, where such modifications require no more than routine experimentation.) The light source used to illuminate the matrix may be the same or different light source used to illuminate the calibration code and/or may be of the same or different wavelength(s). Light is detected from the matrix, i.e., the testing or measurement area of the analyte concentration measurement device, where in many embodiments sample is applied to one side of the matrix and light illuminates and is detected from another side of the matrix, e.g., the side opposite the sample application side, as is often the case in when the analyte concentration measurement device is configured as a test strip. Regardless, light is detected from the testing area of the matrix, which may or may not be the opposite side of the matrix from which sample is applied.

Light is detected from the testing area by at least one detector of the detector array, where imaging optics may be used to focus or direct light from the testing area onto the specific detector(s) of the detector array. The signal detected by the appropriate detector(s) of the detector array is used to determine the analyte concentration of an analyte in the sample. As such, the above-described methods provide a calibrated analyte concentration.

The subject methods may also include determining whether sufficient sample has been applied to the matrix as described in copending European patent application claiming priority from USSN 10/137,598 [Attorney's ref: P033788EP.]

### KITS

Finally, kits for practicing the subject methods are provided. The subject kits include at least one device of the subject invention. The subject kits may also include one or more analyte concentration measurement devices, e.g., one or more test strips, frustum shaped measurement devices, etc., stored in a suitable container that has a photometrically readable mark positioned thereon. The subject kits may further include an element for obtaining a physiological sample. For example, where the physiological sample is blood, the subject kits may further include an element for obtaining a blood sample, such as a lance for sticking a finger, a lance actuation means, and the like. In addition, the subject kits may include a control solution or standard, e.g., a control solution that has a known analyte concentration such as a known glucose concentration. The kits may further include instructions for using the at least one device for determining the presence and/or concentration of at least one analyte in a physiological sample applied to an analyte concentration measurement device and/or instructions for calibrating the at least one device using a photometrically readable mark on a container. The instructions may be printed on a substrate, such as paper or plastic, etc. As such, the instructions may be present in the kits as a package insert, in the labeling of the container of the kit or components thereof (i.e., associated with the packaging or sub-packaging) etc. In other embodiments, the instructions are present as an electronic storage data file present on a suitable computer readable storage medium, e.g., CD-ROM, diskette, etc.

It is evident from the above description and discussion that the above described invention provides devices and methods for easily calibrating an analyte concentration determination device, i.e., an optical meter. The above described invention provides a number of advantages, including, but not limited to, ease of use, ease and low cost of manufacture and automation. As such, the subject invention represents a significant contribution to the art.

The subject invention is shown and described herein in what is considered to be the most practical, and preferred embodiments. It is recognized, however, that departures may be made therefrom, which are within the scope of the invention, and that obvious modifications will occur to one skilled in the art upon reading this disclosure.

The specific devices and methods disclosed are considered to be illustrative and not restrictive. Modifications that come within the meaning and range of equivalents of the disclosed concepts, such as those that would readily occur to one skilled in the relevant art, are intended to be included within the scope of the appended claims,

## Claims

1. A device for determining the concentration of an analyte in a physiological sample applied to an analyte concentration measurement device, said device comprising:
(a) at least one light source;
(b) a photometric detector array comprising at least two detectors: (a) a calibration detector, and (b) one other detector, wherein said at least one calibration detector is capable of detecting a photometrically readable calibration mark from an analyte concentration measurement container for calibrating said device and said one other detector is capable of detecting reflected light from the analyte concentration measurement device for determining analyte concentration; and
(c) means for calibrating at least one of: said at least one light source, one or more of said detectors, imaging optics, a microprocessor, and an algorithm used to compute analyte concentration.

2. The device according to claim 1, wherein one or more detectors of said detector array is capable of detecting light from both a photometrically readable calibration mark from an analyte concentration measurement container for calibrating said device and from said analyte concentration measurement device for determining analyte concentration

3. The device according to claims 1 or 2, wherein said light source is capable of emitting light of at least two different wavelengths.

4. The device according to claims 1 to 3, wherein said detector array comprises from about 2 to about 1000 detectors.

5. The device according to claims 1 to 3, wherein said detector array comprises more than about 1000 detectors.

6. A system for calibrating an analyte concentration determination device, said system comprising:
(a) a device according to claims 1 to 5; and
(b) an analyte concentration measurement device container comprising a photometrically readable calibration mark

7. A method for calibrating an analyte concentration determination device, said method comprising:
(a) providing a device according to claims 1 to 5;
(b) associating said device with an analyte concentration measurement container having a photometrically readable calibration mark;
(c) detecting said photometrically readable calibration mark from said container by said at least one calibration detector of said detector array; and
(d) calibrating at least one of: said at least one light source, said at least one detector of said detector array and said algorithm of said analyte concentration determination device based on said detected photometrically readable calibration mark.

8. A kit for calibrating an analyte concentration determination device, said kit comprising:
(a) an analyte concentration determination device according to claims 1 to 5; and
(b) instructions for calibrating said device.

9. The kit according to claim 8, further comprising a container comprising at least one analyte concentration measurement device and a photometrically readable calibration mark.

10. The kit according to claims 8 or 9, wherein said kit further includes at least one of:
(a) an element for obtaining a physiological sample; and
(b) a control solution:
